# EUROPEAN PATENT SPECIFICATION

(11) **EP 0 549 744 B1**
(45) Date of publication and mention of the grant of the patent: **14.08.1996**
(21) Application number: 92912159.8
(22) Date of filing: 14.05.1992
(51) Int. Cl.: B27M 3/00, B27M 1/08, E04C 2/24, E04C 3/14, E04C 1/00

(54) **METHOD OF CONVERTING LOGS AND RESULTANT PRODUCT**
VERFAHREN ZUM UMGESTALTEN VON BAUMSTÄMMEN UND DAMIT HERGESTELLTES ERZEUGNIS
PROCEDE DE TRANSFORMATION DE BILLES DE BOIS ET PRODUIT OBTENU

(30) Priority: 03.07.1991 US 725296
(43) Date of publication of application: 07.07.1993
(73) Proprietor: SING, Peter, Winslow, WA 98110 (US)
(72) Inventor: SING, Peter, Winslow, WA 98110 (US)
(74) Representative: Spall, Christopher John
(86) International application number: PCT/US92/04085
(87) International publication number: WO 93/01037

(56) References cited:
- EP-A- 0 388 507
- EP-A- 0 518 246
- CA-A- 2 027 356
- DE-A- 3 924 088
- FR-A- 962 589
- FR-A- 2 512 729
- GB-A- 189 073
- PATENT ABSTRACTS OF JAPAN vol. 13, no. 526 (M-897)22 November 1989 &JP-A-12 15 502(NARITA) 29 August 1989
- DATABASE WPI Week 8907, Derwent Publications Ltd., London, GB; AN 89-052357 & SE-B- 465 412(HAMMARSTROM) 9 September 1991

## Description

Wood has been the preferred building material for homes, bungalows, cottages and cabins for hundreds of years. Log structures are now extremely popular for their beauty, efficiency and comfort; many log buildings are being offered for sale and can be erected from plans and pre-cut log timbers provided by suppliers.

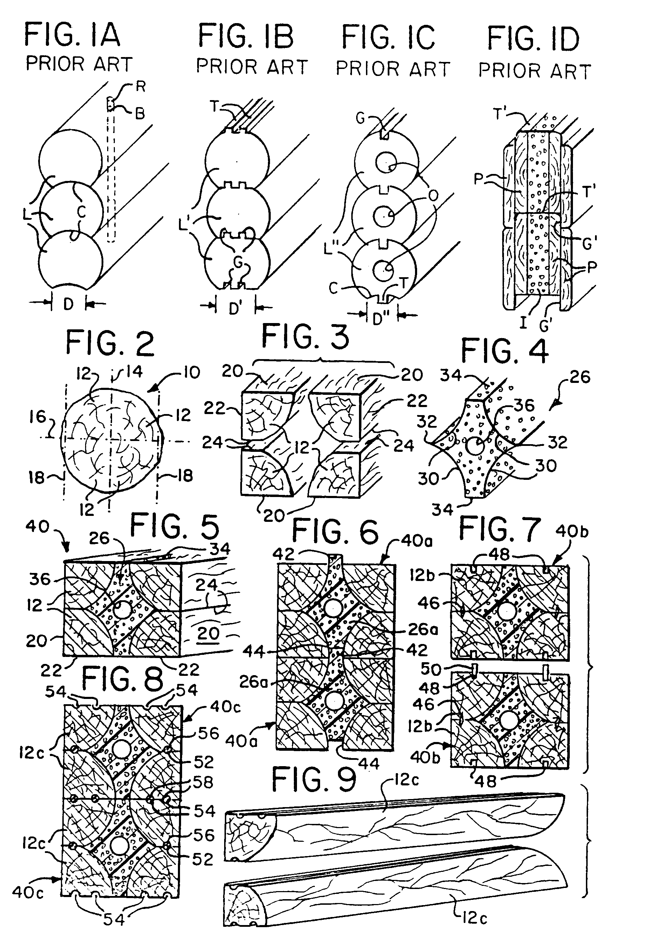

Figs. 1A - 1C of the accompanying drawings show a range of conventional prior art log wall assembly methods in present use. In Fig. 1A, each log L has an arcuate cut-out C along its entire length to accommodate the next log L in nesting relationship. This assembly method is called "Swedish Cope", and the logs are fixed into place by vertical rods or bolts R, extending through aligned bores B.

The logs L' of Fig. 1B are provided with dual tongues T and dual grooves G for interlocking relationship with each other; and Fig. 1C illustrates an assembly method which combines the arcuate cut-outs C of Fig. 1A with the tongue-and-groove technique of Fig. 1B. Logs L'' of Fig. 1C are all bored axially as at 0 for the insulative effect of air space and to provide a conduit for concealed wiring, piping or the like.

Walls constructed according to the above methods are adequate for a rough camping cabin or the like, but all share the disadvantages of diminished insulative effect resulting from the reduced wall thicknesses D, D' and D'', which control the transfer of heat or cold through each respective wall. In addition, dirt and dust collecting in the crevices where the logs meet is difficult to prevent or remove. For more comfortable living, the inner wall surface must be covered with plasterboard or other drywall construction, which adds very considerably to the building's costs and eliminates the option of maintaining the charm and beauty of a clear interior wood finish.

Fig. 1D illustrates a form of wood exterior wall construction currently in use, which features laminated wood panels P formed with interlocking tongues T' and grooves G', and with centrally disposed foam insulating core I. Structures built with this system are very satisfactory in appearance and performance, but are considerably more expensive, largely due to the extensive milling operations and processes required to form this composite laminated building material.

It is the principal object of this invention to provide a method of preparing logs for making a product free of all the disadvantages of the above-described prior art, and which has its own distinct advantages as follows: 1) Smaller logs, requiring less growing time and therefore less expensive than the logs of conventional log construction are used. 2) The converted logs of this invention, when erected as a wall, present both interior and exterior smooth and flat for easy finishing, without the need for installing plasterboard or the like as the inside facing of the wall, and retaining the warmth and beauty of wood grain optionally inside and out. 3) The converted logs of this invention are much lighter in weight than conventional logs, and far easier to handle and install. 4) The strength of the converted logs is at least as great as that of much larger conventional logs and sufficient to permit their use as beams, joists or in load-bearing walls with the novel converted logs oriented either vertically or horizontally. 5) The insulation value of the converted logs is greater than that of conventional logs at least one and one-half times larger in diameter. 6) No significant portion of the original log is cut away or wasted. 7) All the above features contribute to lower material, handling and construction labor costs, and therefore logs converted according to this invention can produce structures significantly less expensive than comparable conventional log buildings.

Trimmed debarked logs are quartered lengthwise by two diametrical cuts at right angles to each other and optionally at least one outer edge of each quartered log flattened simultaneously. The quartered logs are sawed into desired lengths, then optionally treated with preservatives by conventional methods, followed by kiln-drying and smoothing the cut surfaces in a planing mill. The quartered log pieces are matched, some reversed end-to-end or top-to-bottom if necessary to balance out any significant diameter change along their length, then placed in a rotated position so that the pointed end of each segment (originally the central longitudinal axis of the log) becomes the outer corner of a rectangle, with the arcuate surfaces of all four segments facing inwardly toward each other, and the flattened edges of each pair facing each other parallelly. If desired, the four quadrant pieces may now be assembled in this position by conventional attachment methods (adhesives, bolts, etc.) to form finished "dressed lumber" pieces rectangular in cross-section. With the exception of the step involving flattening the facing edges of each pair of quarter logs, such a method is known, for example from FR-A-952 589. These converted logs, made from smaller diameter timber than conventionally used, are suitable for interior walls, possibly temporary and removable, with small insulation and no load-bearing requirements. For larger load-bearing timbers to be used for outer walls, beams, joists and the like with rectangular cross-sections, the interior substantially quadri-arcuate space formed when the four log quadrants are assembled, may be filled with insulation. According to the present invention, support elements or braces are inserted in the space at selected intervals along the length of the converted log for increased strength. Insulation may take the form of rigid extruded foam plastic shaped to conform to the interior space, and to fit complementarily to the four arcuate log surfaces which face inwardly and define the space; alternately loose insulation particle packed in vapor-barrier plastic bags or even poured into the assembled converted logs' spaces during the erection of a building may be employed selectively.

Where maximum strength and stability are required, such as in earth-retaining walls conventionally built with railroad ties, the interior space in the converted logs of this invention may be filled with concrete, reinforced if desired, either before or during the erection of a retaining wall.

Details of all the preferred embodiments of this invention and of the methods used to create them will be fully described in connection with the accompanying illustrative drawings, wherein:
Figs. 1A - 1C are schematic cross-sectional diagrams of prior art log wall construction;
Fig. 1D is a schematic cross-sectional diagram of a wood-laminated wall construction;
Fig. 2 is an end elevational view of a log to be cut and converted in accordance with the method of this invention;
Fig. 3 is a perspective partial exploded view of the log of Fig. 2 after it has been quartered and the segments re-oriented;
Fig. 4 is a perspective partial view of a rigid foam plastic extrusion to be used as an insulating core element in the practice of this invention;
Fig. 5 is a cross-sectional and perspective view of the log segments of Fig. 3 combined with the foam extrusion of Fig. 4 to form a completed rectangular piece of dressed lumber representing a preferred embodiment of this invention;
Fig. 6 is a cross-sectional and exploded view of two horizontally disposed pieces of a possible use of this invention's product, assembled as if part of a wall being erected;
Fig. 7 is a cross-sectional view of two pieces of dressed lumber similar to the view of Fig. 5, but with fastening means added;
Fig. 8 is a cross-sectional view of two pieces of dressed lumber similar to that of Fig. 5, but with aligning and sealing means added;
Fig. 9 is a perspective view of two of the log segments of Fig. 8, with one reversed to balance out the change in diameter from one end of the original log to the other;
Fig. 10 is a perspective view of a piece of dressed lumber, with two of the four segments offset in length to provide a locking means between two laterally joined pieces of dressed lumber;
Fig. 11 is a rear elevational view of the piece of dressed lumber of Fig. 10;
Fig. 12 is an end perspective view of another embodiment of the product of this invention;
Fig. 13 is a sectional view taken along line 13-13 of Fig. 12;
Fig. 14 is an end perspective view of still another embodiment of a product of this invention;
Fig. 15 is a sectional view taken along line 15-15 of Fig. 14;
Fig. 16 is an end perspective view of still another embodiment;
Fig. 17 is a simple form of the product of this invention;
Fig. 18 is a diagrammatic flow sheet outlining the steps in the alternative paths to convert logs in accordance with this invention; and
Fig. 19 is an end elevational view of a log cut to be converted in accordance with an alternative method of this invention.

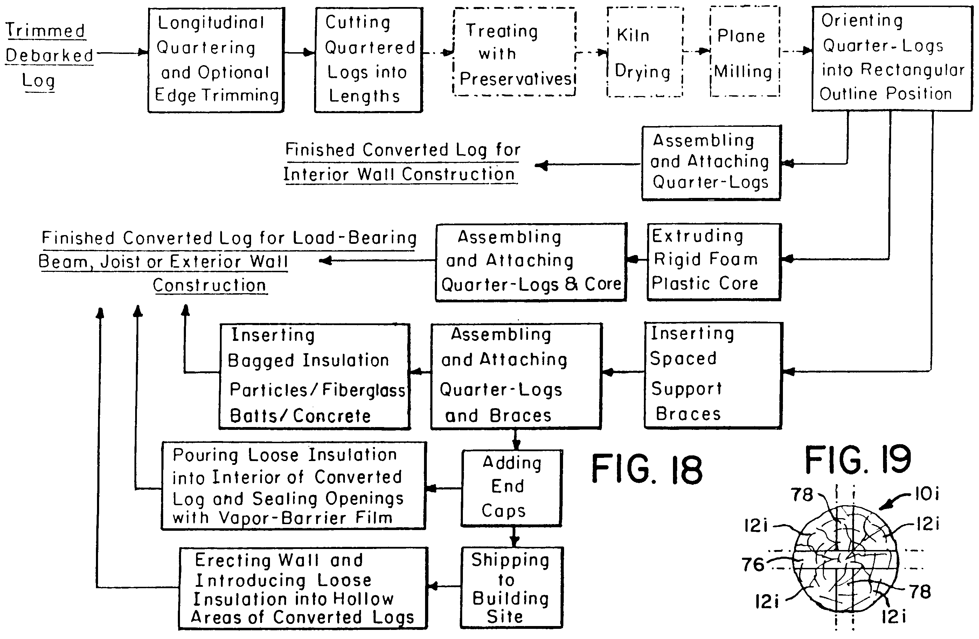

Figs. 2 and 3 show trimmed debarked log 10, to be processed first by dividing it longitudinally into quarter segments 12 by two diametrical cuts at right angles along planes 14 and 16. In the same operation, trimming cuts along planes 18,18', parallel to plane 14 as shown, optionally may be performed; it is obvious that similar trimming cuts may be made in planes parallel to plane 16 as well if desired. Thereafter, the quarter logs may be treated with preservatives either by soaking or pressure-impregnation, then kiln-dried for dimensional stability (see Fig. 18).

As Fig. 3 illustrates, when quarter segments 12 are rotated so that perpendicular cut surfaces 20 and 22 face outwardly and each trimmed flat surface 24 faces another, a rectangular cross-sectional configuration is achieved (with the second trimming cuts noted above, a square configuration can result).

A preferred embodiment of this invention uses the rigid foam plastic extrusion 26 of Fig. 4 as the core filling space 28 between the quarter logs 12 when assembled (Fig. 5). Foam plastic extrusion 26 is shaped with four concave surfaces 30, each meeting another at cusps 32. The top and bottom ends of concave surfaces 30, as shown, terminate and are connected by horizontal surfaces 34. Extrusion 26 may be formed with a centrally disposed bore 36 as a conduit for cables, wiring, piping or the like. When elements 12 and 26 shown in Figs. 3 and 4 are combined by conventional attachment methods (adhesive, adhesive with heat/pressure, bolts, screws, etc. - not shown), the resultant piece of converted log dressed lumber 40 shown in Fig. 5 is created.

The converted logs 40a of Fig. 6 are similar to log product 40 of Fig. 5, but elements 40a have the foam insulation cores 26a offset so that tongues 42 projecting outwardly and grooves 44 extending inwardly are formed to permit the interlocking of elements 40a when erecting a wall, either as illustrated or with converted logs 40a vertically aligned.

In Fig. 7, converted log elements 40b are identical to elements 40, except for splines 46, bores 48 and dowels 50. Splines 46 are installed between quarter-logs 12b during assembly of elements 40b to strengthen them; bores 48 may be drilled at the same time; dowels 50 are to be installed and glued into place during wall assembly to facilitate alignment and registration, and to improve bonding between each pair of converted log elements 40b.

Converted log elements 40c shown in Fig. 8 have their quarter-logs 12c each grooved longitudinally at 52 and 54 to accommodate seals 56 and 58, respectively. Seal elements 56, corresponding in shape to grooves 52, serve to align, insulate, act as a vapor barrier and seal quarter-logs 12c within each converted log element 40c; seal elements 58 perform the same functions between converted log elements 40c as they are used in the erection of a wall.

Fig. 9 illustrates two quarter-log segments 12c which are somewhat tapered along their lengths. The upper segment 12c as shown tapers down from left to right, the lower one oppositely. When assembled, the opposing tapers of the two log quarters will cancel each other out, and a uniform rectangular cross-section will result when this pair of log quarters 12c is put together and joined to a second pair which has been similarly oriented.

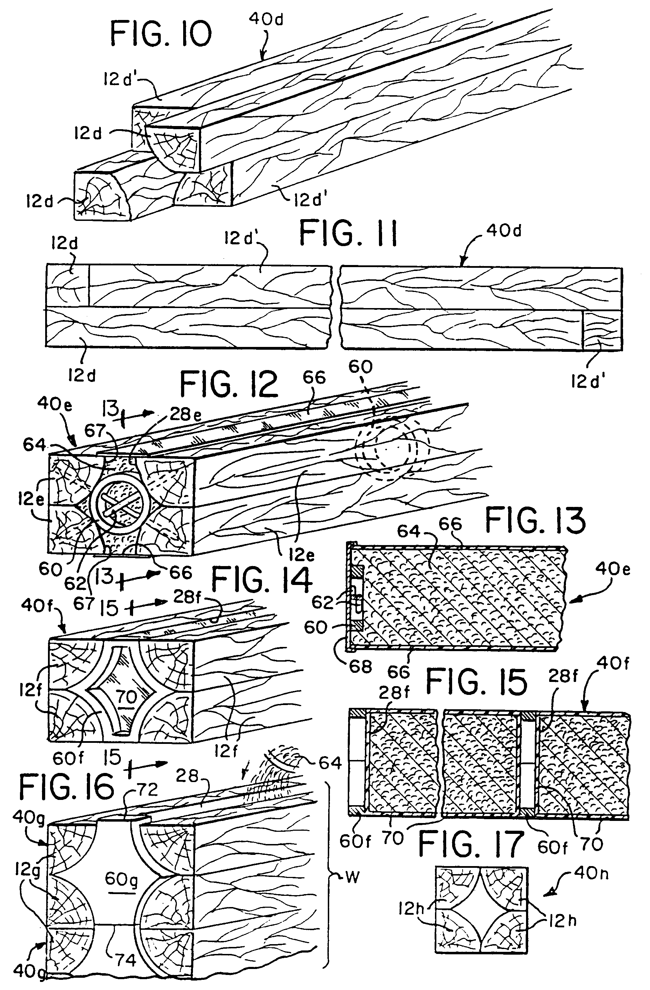

A means for interlocking converted logs to be assembled end-to-end is illustrated in Figs. 10 and 11. Here, converted log 40d has alternating log quarters 12d offset in length with respect to the other two log quarters 12d', permitting lateral interlocking between adjacent converted logs 4Od.

The converted log product 40e shown in Figs. 12 and 13 has log quarters 12e secured to each other and to spaced ring-shaped support braces 60 by means of screws 62. Support braces 60 may be made of metal, plastic or wood, and may be fastened to log quarters 12e by conventional means other than that shown (adhesives, bolts, etc.). Space 28e formed between quarter-logs 12e and extending between support braces 60 may be filled with loose insulation particles 64, retained within converted log structure 40e by vapor-barrier plastic film 66 covering top and bottom openings 67 in 40e; end caps 68 may be applied and secured to either or both ends as required. Plastic vapor-barrier film may be made of Tyvek (Reg. TM of E. I. DuPont de Nemours, Inc., Wilmington, Del.) or equivalent. Fiberglass batts (not shown) may replace insulation particles 64.

Still another embodiment of converted log product is illustrated in Figs. 14 and 15, wherein the dressed lumber product 4Of comprises log quarters 12f assembled and surrounding selectively spaced support braces 60f. In this case, supports 60f are shaped to conform to the curvatures of log quarters 12f s' interior surfaces, and the spaces 28f between braces 60f are filled with pre-assembled bags 70 filled with insulation particles 64. Bags 70 also conform in shape and size to spaces 28f and may be made conveniently of Tyvek or equivalent vapor-barrier film.

Fig. 16 shows a variation of the structure of Figs. 14 and 15. Here, converted log elements 40g have support braces 60g which are offset in two directions with respect to quarter-logs 12g to provide each element 40g with a projecting tongue 72 and corresponding groove 74 for interlocking the converted logs in erecting a wall. Loose insulation particles 64 are shown being introduced by pouring them into spaces 28g during the erection of wall W, to be followed by sealing filled spaces 28g with vapor-barrier film 66 as in Fig. 12 and end caps 68 as in Fig. 13 (not shown).

A simple basic embodiment 40h of the converted log product is illustrated in Fig. 17, wherein quarter-logs 12h, of relatively smaller diameter than those used in previously described versions, are assembled with interior space 28h providing the insulative effect of air. The resulting lumber product 40h, substantially square in cross-section, is useful for erecting interior walls or partitions which may be installed as permanent or temporary room dividers, or the like. Means for interlocking, aligning and sealing converted log timbers 40h, previously described herein for other embodiments, may be employed.

The flow sheet diagram of Fig. 18 describes the steps to be taken to practice alternative forms of the methods for practising this invention and the resultant various converted log products prepared thereby. In combination with the descriptions of the embodiments hereinabove presented, the diagram of Fig. 18 should be substantially self-explanatory.

The converted log products of this invention have many advantages over regular logs and their prior art handling. Since an 8 inch diameter log, for example, can be converted into a finished timber 7"x12" which has the capacity to be used for load-bearing exterior wall construction, or as beams or joists, the growing cycle for a tree to be used for this purpose is therefore greatly reduced, thus minimizing the raw material cost, no matter which species of wood is chosen. The smooth, attractive wood interior and exterior wall surfaces provided require neither siding on the outside nor drywall, such as plasterboard on the inside, further reducing construction costs markedly. The converted logs themselves are significantly lighter in weight, easier and less expensive to handle; they are stronger, and make a wall with an insulation value exceeding that of conventional logs almost twice the diameter of those used for the converted log products of this invention.

Fig. 19 illustrates an extension of the concepts and method of this invention for logs of larger diameter than those discussed above, which are generally in the 6-9 inch diameter range. While larger logs obviously take longer to grow, the advantage of little or no waste in cutting them according to this invention should make the converted logs derived therefrom economically desirable. As shown, four equal right-angled segments 12i may be produced, by symmetrical cuts in perpendicular directions, from log 10i. Segments 12i may be utilized exactly as quarter-logs 12-12h described above to form converted logs; the remaining longitudinal pieces 76 and 78 of log 10i may be readily trimmed for use as conventional beams, planks or other lumber products with minimal waste.

The method of converting logs, and the product resulting therefrom, have been described in full detail. Various other combinations, substitutions and alternative procedures in the practice of this invention are possible without departing from its concepts, spirit or scope, which is defined and limited only by the ensuing claims, wherein:

## Claims

1. The method of converting logs into finished dressed lumber, which comprises the steps of: trimming and debarking the logs; cutting each log longitudinally and diametrically into four equal right-angled segments; transversely cutting quartered logs into selected lengths; assembling the lengths of quartered logs into position so that the arcuate surfaces of four log quarters face toward each other, while the longitudinal cut surfaces thereof face outwardly and are arranged to form a rectangular cross-sectional configuration; and inserting and securing selectively placed support braces into the interior space at intervals within and along the assembled lengths of the quartered logs.

2. The method of converting logs as defined in claim 1, further comprising at least one step following the transverse cutting step and selected from the group consisting of: treating the quartered log lengths with preservatives, kiln-drying the quartered log lengths and plane-milling the cut surfaces of the quartered log lengths, in the order here listed.

3. The method of converting logs as defined in claim 1, further comprising the step of filling the interior space, created when the quartered log lengths have been assembled in the arranged rectangular configuration, with insulative and strengthening means.

4. Converted log product, which comprises:
at least one log, each longitudinally divided by two diametric cuts, said cuts having been made at right angles to each other to form four quarter-log segments from each of said at least one log;
means for fastening four said quarter-log segments together, said four quarter-log segments being positioned so that the arcuate surfaces of said four segments face inwardly toward each other, and so that each cut surface of said four segments face outwardly, being so oriented that the cross-sectional peripheral outline of the converted log product is rectangular; and support bracing means positioned in fitting engagement with said arcuate surfaces of said four quarter-log segments and fixedly attached thereto by said fastening means, said bracing means being selectively spaced when inserted into and secured in the interior space between said four segments at intervals within and along said assembled four quarter-log segments.

5. Converted log product as defined in claim 4, wherein each said quarter-log segment has at least one of its two corners connecting said arcuate surface with one of its cut surfaces trimmed off and flattened to produce a flat surface perpendicular to said one of said cut surfaces.

6. Converted log product as defined in claim 4, further comprising insulating and strengthening means filling the interior space remaining between said quarter-log segments and said support bracing means and being secured thereto, thus forming a unitary converted log product, said insulating and strengthening means being selected from the group consisting of: foam plastic; preformed rigid extruded foam plastic conforming in shape and size to said interior space; loose insulation particles; loose insulation particle retained in vapor-barrier plastic film bags, said bags fitting within said interior remaining space; fiberglass batts; concrete; and reinforced concrete.

7. Converted log product as defined in claim 4, further comprising means for aligning, registering and sealing together said quarter-log segments as well as assembled finished converted log products.

8. Converted log product as defined in claim 4, further comprising means for interlocking any two converted log products in any direction.

9. Method of manufacturing a converted log product, which comprises:
providing four selectively-sized right-angled elongate segments cut symmetrically and longitudinally from logs, the remaining portions of said logs being available for use as conventional lumber in the form of beams, planks, joists and other structural members;
providing means for fastening said four right-angled segments together, said right-angled segments being positioned so that the arcuate surfaces of said segments face inwardly toward each other, and so that each cut surface of said segments face outwardly, said segments being oriented so that the cross-sectional peripheral outline of the converted log product is rectangular; and
providing support bracing means positioned in fitting engagement with said arcuate surfaces of said four quarter-log segments and fixedly attached thereto by said fastening means, said bracing means being selectively spaced when inserted into and secured in the interior space between said four segments at intervals within and along said assembled four quarter-log segments.

## Patentansprüche

1. Verfahren zum Verarbeiten von Baumstämmen zu fertigem, gehobeltem Bauholz, umfassend die Schritte: Zurichten und Entrinden der Baumstämme; Schneiden jedes Baumstamms in Längsrichtung und diametral in vier gleiche, rechtwinklige Segmente; Querschneiden geviertelter Baumstämme zu ausgewählten Längen; Zusammensetzen der geviertelten Baumstammstücke in eine solche Lage, daß die runden Flächen von vier Baumstammvierteln einander zugewandt sind, während ihre Längsschnittflächen nach außen weisen und derart angeordnet sind, daß sie einen rechteckigen Querschnitt bilden; und Einsetzen und Befestigen von selektiv angeordneten Haltestützen in den Innenraum in Abständen innerhalb und entlang der zusammengesetzten Baumstamm-Viertelstücke.

2. Verfahren nah Anspruch 1, umfassend mindestens einen Schritt im Anschluß an das Querschneiden, ausgewählt aus der Gruppe: Behandeln der geviertelten Baumstammstücke mit Schutzmitteln, Ofen-Trocknen der geviertelten Baumstammstücke und Glatthobeln der Schnittflächen der geviertelten Baumstammstücke, in dieser Reihenfolge.

3. Verfahren nach Anspruch 1, umfassend den weiteren Schritt des Ausfüllens des beim Zusammensetzen der geviertelten Baumstammstücke zu der Rechteckform entstehenden Innenraums mit Isolier- und Verstärkungsmitteln.

4. Verarbeitetes Baumstammprodukt, umfassend:
mindestens einen Baumstamm, jeweils in Längsrichtung durch zwei Diametral-Schnitte geteilt, wobei die Schnitte rechtwinklig zueinander erfolgt sind, um vier Baumstamm-Viertelsegmente aus jeweils einem Baumstamm zu erhalten;
Mittel zum Befestigen von vier solchen Baumstamm-Viertelsegmenten aneinander, wobei die vier Baumstamm-Viertelsegmente derart positioniert sind, daß die runden Flächen der vier Segmente nach innen aufeinander zu weisen, während jede Schnittfläche der vier Segmente nach außen weist, und derart orientiert sind, daß der Querschnitts-Umriß des verarbeiteten Baumstammprodukts rechteckig ist; und Haltestützmittel, die in passenden Eingriff mit den runden Flächen der vier Baumstamm-Viertelsegmente angeordnet und an diesen durch Befestigungsmittel befestigt sind, wobei die Stützmittel, als sie in den Innenraum zwischen den vier Segmenten eingesetzt und befestigt wurden, selektiv in Intervallen innerhalb und entlang der zusammengesetzten vier Baumstamm-Viertelsegmente beabstandet wurden.

5. Baumstammprodukt nach Anspruch 4, bei dem jedes der Baumstamm-Viertelsegmente an mindestens einer der beiden Ecken, die die runde Fläche mit einer seiner Schnittflächen verbinden abgerichtet und abgeflacht ist, um eine flache Seite senkrecht zu der einen der Schnittflächen zu bilden.

6. Baumstammprodukt nach Anspruch 4, umfassend Isolier- und Festigungsmittel, die den Innenraum ausfüllen, der zwischen den Baumstamm-Viertelsegmenten und den Haltestützmitteln verbleibt, und die an diesen befestigt sind, um ein einheitliches bearbeitetes Baumstammprodukt zu erhalten, wobei die Isolier- und Festigungsmittel ausgewählt sind aus folgender Gruppe: Kunstschaumstoff, vorgeformter starrer, extrudierter Schaumkunststoff, in Form und Größe dem Innenraum entsprechend; lose Isolierteilchen; lose Isolierteilchen in Tüten aus Dampfsperren-Kunststoffolie, wobei die Tüten in den verbleibenden Innenraum passen; Glasfaserwolle; Beton und bewehrter Beton.

7. Baumstammprodukt nach Anspruch 4, **gekennzeichnet durch** Mittel zum Ausrichten, Bündig-Stellen und Verbinden der Baumstamm-Viertelsegmente sowie zusammengebauter fertig bearbeiteter Baumstammprodukte.

8. Baumstammprodukt nach Anspruch 4, **gekennzeichnet durch** Mittel zum Verrasten von jeweils zwei bearbeiteten Baumstammprodukten in jeder Richtung.

9. Verfahren zum Herstellen eines verarbeiteten Baumstammprodukts, umfassend:
Breitstellen von vier selektiv bemessenen, rechtwinkligen Längssegmenten, die symmetrisch und in Längsrichtung aus Baumstämmen geschnitten sind, wobei die übrigbleibenden Abschnitte der Baumstämme als konventionelles Bauholz in der Form von Balkan, Bohlen, Querträgern und anderen Bauelementen verfügbar sind;
Bereitstellen von Mitteln zum Befestigen der vier rechtwinkligen Segmente aneinander, wobei die rechtwinkligen Segmente derart positioniert werden, daß die runden Flächen der Segmente nach innen aufeinander zu weisen, und jede Schnittfläche der Segmente nach außen weist, wobei die Segmente derart orientiert sind, daß der Querschnitts-Umriß des verarbeiteten Baumstammprodukts rechteckig ist; und
Bereitstellen von Haltestützmitteln, die in passenden Eingriff mit den runden Flächen der vier Baumstamm-Viertelsegmente gebracht und an diesen mit Hilfe von Befestigungsmitteln befestigt sind, wobei die Stützmittel beim Einsetzen und Festlegen in dem Innenraum zwischen den vier Segmenten in Intervallen innerhalb und entlang der zusammengesetzen vier Baumstamm-Viertelsegmente selektiv beabstandet sind.

## Revendications

1. Procédé pour transformer des billes de bois en un bois d'oeuvre équarri et fini, qui comprend les étapes consistant à : rogner et écorcher les billes de bois; découper chaque bille de bois longitudinalement et diamétralement en quatre segments égaux à angle droit; découper transversalement les billes de bois découpées en quarts de rond en des longueurs choisies; réunir les longueurs de bois découpées en quarts de rond en position de telle sorte que les surfaces courbes des quatre quarts de rond des billes de bois soient disposées en face les unes des autres, tandis que leurs surfaces de coupe longitudinale sont tournées vers l'extérieur et sont disposées de manière à former une configuration rectangulaire en coupe transversale; et insérer et `fixer des entretoises de support disposées de façon sélective dans l'espace intérieur à certains intervalles le long des longueurs assemblées des billes de bois découpées en quarts de rond.

2. Procédé pour transformer des billes de bois selon la revendication 1, comprenant en outre au moins une étape intervenant à la suite de l'étape de découpage transversal et sélectionnée parmi le groupe incluant : le traitement des longueurs des billes de bois découpées en quarts de rond avec des agents de préservation, faire sécher au four les longueurs de billes de bois découpées en quarts de rond et réaliser le planage, au rabot des surfaces de coupe des longueurs des billes de bois découpées en quarts de rond, dans l'ordre indiqué ici.

3. Procédé pour transformer des billes de bois selon la revendication 1, comprenant en outre l'étape consistant à remplir l'espace intérieur, créé lorsque les longueurs de billes de bois découpées en quarts de rond ont été assemblées dans la disposition rectangulaire créée, avec des moyens d'isolation et de renforcement.

4. Produit obtenu à partir d'une bille de bois transformée, qui comprend :
au moins une bille de bois, chaque bille de bois étant divisée longitudinalement au moyen de deux coupes diamétrales, lesdites coupes étant effectuées à angle droit de manière à former des segments de bille de bois en quarts de rond à partir de chacune de l'une ou desdites billes de bois;
des moyens pour fixer entre eux lesdits quatre segments de ladite bille de bois découpée en quarts de rond, lesdits quatre segments de la bille de bois découpée en quarts de rond étant positionnés de telle sorte que les surfaces courbes desdits quatre segments sont tournées las unes vers les autres sur le côté intérieur et de telle sorte que chaque surface de coupe desdits quatre segments est tournée vers l'extérieur, en étant orientée de telle sorte que le contour périphérique en coupe transversale du produit formé d'une bille de bois transformée est rectangulaire; et des moyens d'entretoisement et de support positionnés de manière à s'appliquer d'une manière ajustée contre lesdites surfaces courbes desdits segments de la bille de bois découpée en quarts de rond et fixés à demeure sur ces surfaces par lesdits moyens de fixation, lesdits moyens d'entretoisement étant espacés au choix lorsqu'ils sont insérés et fixés dans l'espace intérieur entre lesdits quatre segments à des intervalles le long desdits quatre segments de la bille de bois découpée en quarts de rond.

5. Produit formé à partir d'une bille de bois transformée selon la revendication 4, dans lequel au moins l'un des deux coins desdits segments de la bille de bois découpée en quarts de rond, au niveau desquels s'effectue la jonction de ladite surface courbe et de l'une des surfaces de coupe du segment, est rogné et aplani de manière à former une surface plate perpendiculaire à ladite surface de coupe.

6. Produit formé à partir d'une bille de bois transformée selon la revendication 4, comprenant en outre des moyens d'isolation et de renforcement remplissant l'espace intérieur subsistant entre lesdits segments de ladite bille de bois découpée en quarts de rond et lesdits moyens de support et d'entretoisement et étant fixés à ces segments et moyens, en formant ainsi un produit unitaire formé à partir d'une bille de bois transformée, lesdits moyens d'isolation et de renforcement étant choisis parmi le groupe comprenant : une mousse de matière plastique; une mousse de matière plastique extrudée rigide et préformée adaptée du point de vue formes et dimensions audit espace intérieur; des particules isolantes libres; des particules isolantes libres retenues dans des sacs formés d'une pellicule plastique étanche à la vapeur, lesdits sacs remplissant ledit espace intérieur restant; des mats de fibres de verre; du béton; et du béton armé.

7. Produit formé à partir d'une bille de bois transformée selon la revendication 4, comprenant en outre des moyens pour réaliser l'alignement, la mise de niveau et la réunion étanche réciproque desdits segments de la bille de bois découpée en quarts de rond, ainsi que des produits assemblés finis formés de billes de bois transformées.

8. Produit formé à partir d'une bille de bois transformée selon la revendication 4, comprenant en outre des moyens pour bloquer entre eux deux produits quelconques formés à partir de la bille de bois transformée, dans une direction quelconque.

9. Procédé pour fabriquer un produit formé à partir d'une bille de bois, qui consiste à :
former quatre segments à angle droit, allongés, ayant des dimensions sélectionnées et découpés symétriquement et longitudinalement dans des billes de bois, les parties restantes desdites billes de bois étant disponibles pour être utilisées en tant que bois d'oeuvre classique pour la fabrication de poutres, de planches, de solives et d'autres éléments structurels;
prévoir des moyens pour fixer entre eux lesdits quatre segments à angle droit, lesdits segments à angle droit étant positionnés de telle sorte que les surfaces courbes desdits segments se font face sur le côté intérieur et de telle sorte que chaque surface découpée desdits segments est tournée vers l'extérieur, lesdits segments étant orientés de telle sorte que le contour périphérique en coupe transversale du produit formé à partir d'une bille de bois transformée est rectangulaire; et
prévoir des moyens de support et d'entretoisement positionnés de manière à s'appliquer d'une manière ajustée contre lesdites surfaces courbes desdits segments de la bille de bois découpée en quarts de rond et fixés à demeure sur ces surfaces par lesdits moyens de fixation, lesdits moyens d'entretoisement étant espacés au choix lorsqu'ils sont insérés et fixés dans l'espace intérieur entre lesdits quatre segments à des intervalles le long desdits quatre segments de la bille de bois découpée en quarts de rond.
